# EUROPÄISCHE PATENTSCHRIFT

(11) **EP 1 523 394 B1**
(45) Veröffentlichungstag und Bekanntmachung des Hinweises auf die Patenterteilung: **28.09.2011**
(21) Anmeldenummer: 03765098.3
(22) Anmeldetag: 23.07.2003
(51) Int. Cl.: B23K 35/02, B23K 35/00, B23B 51/02, B23D 77/00

(54) **MASCHINENWERKZEUG MIT EINEM WERKZEUGSCHAFT UND EINEM SCHNEIDKOPF**
MACHINE TOOL WITH A TOOL SHANK AND A CUTTING HEAD
OUTIL DE MACHINE COMPRENANT UNE TIGE D'OUTIL ET UNE TETE DE COUPE

(30) Priorität: 23.07.2002 DE 10233530
(43) Veröffentlichungstag der Anmeldung: 20.04.2005
(73) Patentinhaber: Komet Group GmbH, 74354 Besigheim (DE)
(72) Erfinder: KÖCHER, Michael, 71638 Ludwigsburg (DE)
(74) Vertreter: Wolf, Eckhard
(86) Internationale Anmeldenummer: PCT/EP2003/008031
(87) Internationale Veröffentlichungsnummer: WO 2004/009285

(56) Entgegenhaltungen:
- EP-A- 0 937 536
- EP-A- 0 970 776
- WO-A-90/04490
- DE-A- 2 735 638
- US-A- 4 431 465
- US-A- 4 602 954
- US-A- 4 976 325
- US-A- 5 172 780
- US-A- 5 971 674
- US-B1- 6 348 273

## Beschreibung

Die Erfindung betrifft ein Maschinenwerkzeug mit einem Werkzeugschaft und einem Schneidkopf aus unterschiedlichen Werkstoffen, die an einander zugewandten Fügeflächen über eine Fügeschicht aus duktilem Lotmaterial stoffschlüssig miteinander verbunden sind, wobei in die Fügeschicht Pulverpartikel aus einem temperaturfesten, bei Fügetemperatur nicht schmelzenden Werkstoff mit kleinerem Wärmedehnungskoeffizient als das Lotmaterial eingebettet sind. Die Erfindung bezieht sich weiter auf ein Verfahren zur Herstellung eines derartigen Maschinenwerkzeugs sowie eine für die Herstellung eines solchen Maschinenwerkzeugs geeignete Lotscheibe.

Bei der Herstellung von Bohrstangen ist es bekannt, den Werkzeugschaft und den Schneidkopf aus unterschiedlichen Materialien getrennt, beispielsweise spanabhebend oder spanlos herzustellen und an einander zugewandten Fügeflächen miteinander zu verlöten (DE-A-198 56 986). Ein wesentliches Problem bei der herzustellenden Lötverbindung besteht darin, dass die zu verbindenden Materialien unterschiedliche Wärmeausdehnungskoeffizienten aufweisen. Das bedeutet, dass beim Abkühlvorgang im Bereich der Lotverbindung Spannungen auftreten können, die die Belastbarkeit des Werkzeugs herabsetzen und die zu einer Rissbildung führen können.

Weiter ist es zum Verlöten von Bauteilen aus Wolframcarbid mit einem Haltebauteil oder Schaft aus Stahl bekannt, eine Lötpaste mit kugelförmigen Partikeln aus Nickel oder aus Nickel und Kupfer (DE-A 27 25 638) oder aus Eisen und Nickel (US-A-44 31 465), die einen kleineren Wärmeausdehnungskoeffizienten als das Lotmaterial haben, zu verwenden, um die in der Lotschicht auftretenden Spannungen zu reduzieren.

Der Erfindung liegt daher die Aufgabe zugrunde, die bekannten Maschinenwerkzeuge der eingangs angegebenen Art dahingehend zu verbessern, dass die im Fügebereich beim Abkühlen nach dem Lötvorgang auftretenden inneren Spannungen reduziert oder eliminiert werden können.

Zur Lösung dieser Aufgabe werden die in den Patentansprüchen 1, 15 und 20 angegebenen Merkmalskombinationen vorgeschlagen. Vorteilhafte Ausgestaltungen und Weiterbildungen der Erfindung ergeben sich aus den abhängigen Ansprüchen.

Der erfindungsgemäßen Lösung liegt primär der Gedanke zugrunde, dass die Fügeschicht über ihre Schichtdicke hinweg einen gegenüber dem verwendeten Lotmaterial reduzierten Wärmeausdehnungskoeffizienten aufweist, mit dem Ziel, dass in der Fügeschicht auf der Schaftseite und der Kopfseite an die benachbarten Materialien angenäherte Wärmeausdehnungskoeffizienten erhalten werden. Um dies zu erreichen, wird gemäß der Erfindung vorgeschlagen, dass in die Fügeschicht Pulverpartikel aus einem temperaturfesten Werkstoff mit kleinerem Wärmeausdehnungskoeffizienten als das Lotmaterial eingebettet sind. Ein variabler Wärmeausdehnungskoeffizient lässt sich dadurch erzielen, dass die Dichte der Pulverpartikel über die Dicke der Fügeschicht hinweg variiert.

Eine bevorzugte Ausgestaltung der Erfindung sieht vor, dass der Werkzeugschaft aus Stahl, vorzugsweise aus Werkzeugstahl besteht, während der Schneidkopf aus einem Material der Gruppe Hartmetall, Cermet, Keramik, PKD oder Bornitrit besteht. Die Fügeschicht enthält zweckmäßig ein Lotmaterial der Gruppe Kupfer, Silber, Kobalt oder deren Legierungen, während die in das Lotmaterial der Fügeschicht eingebetteten Pulverpartikel aus einem Material der Gruppe Wolfram, Molybdän, Eisen, Kobalt, Nickel oder deren Carbide bestehen. Die Dicke der Fügeschicht sollte ein Vielfaches des Durchmessers der Pulverpartikel betragen und vorzugsweise dem 10- bis 1000-fachen Durchmesser der Pulverpartikel entsprechen. Die Dicke der Fügeschicht selbst beträgt zweckmäßig 0,2 bis 1 mm.

Für die vorstehende Merkmalskombination ist es von Vorteil, wenn die Dichte der Pulverpartikel auf der Seite des Schneidkopfs größer ist als auf der Seite des Werkzeugschafts.

Die einander zugewandten Fügeflächen des Schneidkopfs und des Werkzeugschafts sind bevorzugt planparallel zueinander ausgebildet. Es hat sich jedoch gezeigt, dass es zur Reduzierung von Fügespannungen vorteilhaft sein kann, wenn die einander zugewandten Fügeflächen des Schneidkopfs und des Werkzeugschafts vorzugsweise komplementär zueinander gekrümmt sind. Als besonders vorteilhaft hat es sich erwiesen, wenn die Fügefläche des Schneidkopfs konvex und die Fügefläche des Werkzeugschafts konkav gekrümmt ist. Auf diese Weise können die in der Fügeschicht zwischen Hartmetall und Lot auftretenden Spannungen, die bei planparallelen Fügeflächen zu einer Rissbildung führen könnten, reduziert werden. Alternativ dazu können die Fügeflächen auch Strukturen in Form von Rillen, Höckern, Vertiefungen, Erhöhungen aufweisen. Mit solchen Strukturen ergeben sich im gefügten Zustand Formschlüsse sowie mechanische Bereiche, die zu einem Spannungsabbau und zu einer verbesserten Momentenübertragung führen.

Eine weitere vorteilhafte Ausgestaltung der Erfindung sieht vor, dass der Werkzeugschaft mindestens eine vorzugsweise schraubenförmig gewundene Spannut aufweist, die die Fügeschicht in Richtung Werkzeugkopf durchdringt. Weiter wird gemäß der Erfindung vorgeschlagen, dass der Werkzeugschaft mindestens einen vorzugsweise schraubenförmig gewundenen Funktionskanal aufweist, der die Fügeschicht in Richtung Werkzeugkopf durchdringt. Der Funktionskanal ist überwiegend dazu bestimmt, ein Kühlschmiermittel durch den Werkzeugschaft hindurch zu den Schneiden des Schneidkopfs zu führen. Für andere Anwendungen ist es grundsätzlich auch möglich, dass die Dichte der Pulverpartikel über den Radius der Fügeschicht hinweg variiert. Dies ist vor allem dann von Vorteil, wenn die Lotscheibe konstruktionsbedingte Inhomogenitäten, beispielsweise einen nicht schmelzenden Kern als Zentriermittel, enthält.

Bei der Herstellung des Maschinenwerkzeugs wird gemäß der Erfindung ein vorgeformter Werkzeugschaft und ein vorzugsweise als Rohling vorgeformter Schneidkopf durch Aufschmelzen und anschließendes Abkühlen eines Lots im Bereich eines Fügespalts unter Bildung einer Fügeschicht stoffschlüssig miteinander verbunden. Die Erfindung sieht hierbei vor, dass das Lot in Form mindestens einer Scheibe aus Lotmaterial mit eingebetteten temperaturfesten Pulverpartikeln vorzugsweise mit über die Scheibendicke variabler Dichte in den Fügespalt eingelegt wird. Grundsätzlich ist es dabei möglich, dass die Lotscheibe zuvor an einen der Fügepartner fixiert, beispielsweise angesintert wird. Die Variation des Dichteverlaufs in der Fügeschicht kann dadurch erreicht werden, dass mehrere Lotscheiben mit unterschiedlicher Partikeldichte in den Fügespalt eingelegt und dort miteinander verschmolzen werden.

Der Verfahrensablauf bei der Herstellung des erfindungsgemäßen Maschinenwerkzeugs weist zweckmäßig folgende Schritte auf:
a) Die aus dem Schneidkopf und dem Werkzeugschaft bestehenden Fügepartner werden mindestens auf Schmelztemperatur des verwendeten Lots aufgeheizt;
b) die mindestens eine Lotscheibe wird vor, während oder nach dem Aufheizen in einen Fügespalt zwischen den Fügepartnern eingelegt;
c) bei Erreichen der Fügetemperatur werden die einander zugewandten Kontaktflächen der Fügepartner mit aufgeschmolzenem Lotmaterial benetzt;
d) danach werden die Fügepartner unter Bildung eines Verbundteils vorzugsweise auf Raumtemperatur abgekühlt;
e) anschließend wird das Verbundteil vorzugsweise bei Raumtemperatur spanabhebend bearbeitet und im Fügebereich beispielsweise durch Schleifen auf gleichen Durchmesser gebracht;
f) das so vorbereitete Verbundteil wird erneut auf eine Beschichtungstemperatur unterhalb der Fügetemperatur erhitzt und eine Zeit lang auf dieser Temperatur gehalten und dabei getempert und vorzugsweise mit einem Überzugsmaterial beschichtet;
g) danach wird das Verbundteil unter Bildung des Fertigteils auf Raumtemperatur abgekühlt.

Der axiale Dichteverlauf der Pulverteilchen im Lotmaterial wird so ausgewählt, dass im Fertigteil eine im Wesentlichen spannungsfreie Fügezone gebildet wird. Der vorzugsweise aus oberflächig aufgekohltem Einsatzstahl bestehende Werkzeugschaft wird beim Abschrecken der Fügepartner aufgehärtet und beim anschließenden Beschichtungsprozess angelassen und entspannt. Vorzugsweise wird die Lotscheibe im festen Zustand vor dem Aufheizen der Fügepartner mit einem der Fügepartner verbunden, vorzugsweise auf diesen aufgesteckt oder aufgesintert.

Die zur Herstellung der Fügeverbindung verwendete Lotscheibe besteht gemäß der Erfindung aus einem duktilen Lotmaterial, in welches Pulverpartikel aus einem temperaturfesten Werkstoff mit kleinerem Wärmeausdehnungskoeffizienten als das Lotmaterial eingebettet ist. Vorteilhafterweise variiert die Dichte der Pulverpartikel über die Scheibendicke hinweg, wobei die Dichtevariation durch mehrere Lotscheiben mit unterschiedlicher Partikeldichte erzeugt werden kann. Für bestimmte Anwendungsfälle ist es auch möglich, Lotscheiben zu verwenden, deren Partikeldichte über den Scheibenradius hinweg variiert.

Die Lotscheibe enthält zweckmäßig ein Lotmaterial aus der Gruppe Kupfer, Silber, Kobalt oder deren Legierungen, während die in das Lotmaterial eingebetteten Pulverpartikel vorteilhafterweise aus einem Material der Gruppe Wolfram, Molybdän, Eisen, Kobalt, Nickel oder deren Carbide bestehen. Gemäß einer weiteren bevorzugten Ausgestaltung der Erfindung weist die Lotscheibe eine an die Kontaktstellen der Fügepartner angepasste konvexe Randkontur auf, die durch mindestens eine konkave Randausnehmung für den Durchgriff einer Spannut unterbrochen ist. Vorteilhafterweise sind zwei auf einander gegenüberliegenden Seiten angeordnete konkave Randausnehmungen vorgesehen. Außerdem können die Lotscheiben mit mindestens einer Bohrung versehen werden, die mit einem Funktionskanal in den Fügepartnern fluchtet. Für die Verbindung von Fügepartnern mit nicht ebenen Kontaktflächen kann die Lotscheibe auch als dreidimensionales Formstück mit einer entsprechenden Außenkontur und gegebenenfalls mit Querkanälen oder Durchbrüchen ausgebildet sein.

Im Folgenden wird die Erfindung anhand eines in der Zeichnung in schematischer Weise dargestellten Ausführungsbeispiels näher erläutert. Es zeigen:
- Fig. 1a und b: die Teile eines Bohrwerkzeugs in zwei verschiedenen schaubildlichen Explosionsdarstellungen;
- Fig. 1c: eine schaubildliche Darstellung des Bohrwerkzeugs im Fertigzustand;
- Fig. 2a und b: schaubildliche Darstellungen eines Reibwerkzeugs in Explosionsdarstellung und im Fertigzustand;
- Fig. 3: einen ausschnittsweisen Schnitt durch die Lotscheibe des Werkzeugs nach Fig. 1 und 2 in vergrößerter Darstellung;
- Fig. 4a bis g: ein Schema zur Veranschaulichung der Wärmeausdehnung der Fügepartner des Maschinenwerkzeugs in verschiedenen Verfahrensstufen während des Löt- und Beschichtungsvorgangs;
- Fig. 5a und b: ein abgewandeltes Ausführungsbeispiel zweier sich ergänzender Lotscheiben vor dem Lötvorgang;
- Fig. 5c: die beiden miteinander verbundenen Lotscheiben nach dem Lötvorgang;
- Fig. 6: eine schaubildliche Darstellung einer als Formteil ausgebildeten Lotscheibe;
- Fig. 7: eine schematische schaubildliche Explosionsdarstellung der Teile eines Maschinenwerkzeugs mit gekrümmten Fügeflächen.

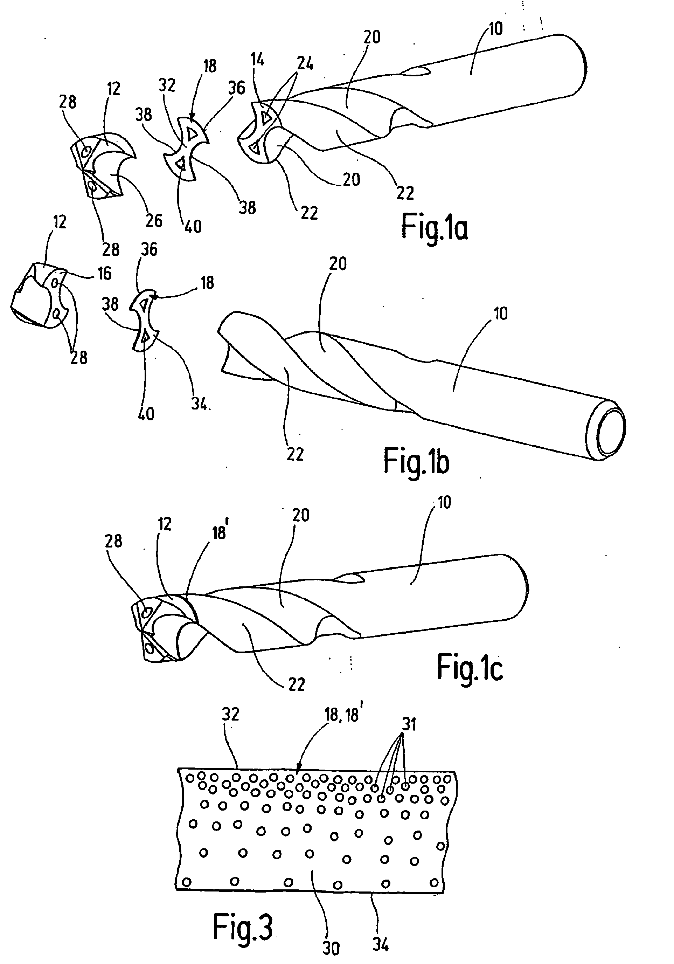

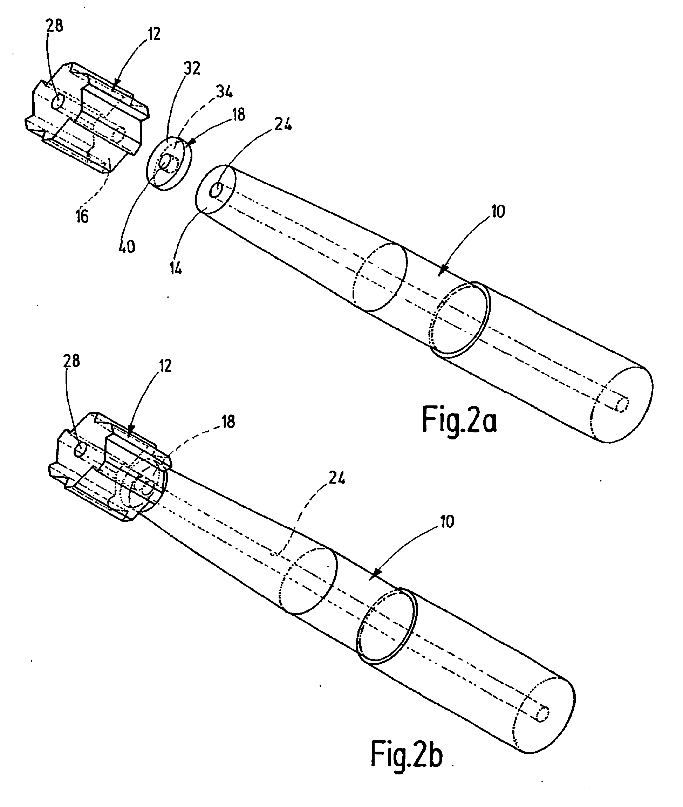

Die in den Fig. 1 und 2 gezeigten Maschinenwerkzeuge bestehen im Wesentlichen aus einem Werkzeugschaft 10 und einem Schneidkopf 12, die an ihren einander zugewandten Fügeflächen 14,16 mittels einer Lotscheibe 18 aus duktilem Lotmaterial stoffschlüssig miteinander verbunden (verlötet) werden. Das in Fig. 1a bis c gezeigte Ausführungsbeispiel ist als Bohrwerkzeug ausgebildet, während das Ausführungsbeispiel nach Fig. 2a und b als Reibwerkzeug ausgebildet ist.

Im Falle der Fig. 1a bis c weist der Werkzeugschaft 10 zwei Spanfördernuten 20 auf, die an ihren Flanken durch zwei wendelförmig gekrümmte Rücken 22 begrenzt sind. Weiter sind im Werkzeugschaft zwei im Querschnitt dreieckige Funktionskanäle 24 vorgesehen, die mit der gleichen Steigung wie die Rippen 22 wendelförmig gekrümmt sind und sich entlang der Rippen 22 des Werkzeugschafts 10 erstrecken. Der vorzugsweise aus aufgekohltem Einsatzstahl bestehende Werkzeugschaft 10 bildet ein Halbfertigprodukt, dessen Spanfördernuten 20 und Funktionskanäle 24 in einen rohrförmigen Rohling durch Rundkneten eingeformt wurden (vgl. DE-A-198 56 986). Der Rohling besteht zweckmäßig aus einem Einsatzstahl, dessen Phasenumwandlungspunkt in einem Bereich zwischen 480 und 650°C liegt. Vorteilhafterweise wird hierzu ein Einsatzstahl mit einem Kohlenstoffgehalt kleiner 2%, vorzugsweise ein 16 MnCr 5-Stahl verwendet. Aufgrund seiner Duktilität lässt sich dieser Werkstoff rissfrei im Knetverfahren verformen. Anschließend wird das Material durch Aufkohlen entweder nur außen oder außen und innen oberflächengehärtet. Dadurch erhält man einen definierten Härteverlauf über den Wandquerschnitt, so dass der Bohrerkörper im aufgehärteten Zustand harte Oberflächen- und zähe Innenbereiche aufweist, die dafür sorgen, dass etwaige Risse, die im aufgehärteten Bereich entstehen, sich nicht in das Innere des Bohrers fortsetzen. Dadurch wird die Bruchgefahr verringert und die Belastbarkeit des Bohrers erhöht. Wahlweise kann der Bohrer auch durch Nitrieren aufgehärtet werden. Der hohe Phasenumwandlungspunkt ist auch für den späteren Lötprozess von Vorteil, da die Phasenumwandlung bei der Abkühlung mit einer Volumenvergrößerung verbunden ist, die etwaige Spannungen an der Fügestelle mit dem Lot reduziert, so dass eine Rissbildung an der Fügestelle vermieden wird. Maßgeblich für diese Eigenschaften ist der relativ niedrige Chromanteil in dem Einsatzstahl.

Der Schneidkopf 12 ist als Formteil vorzugsweise aus Hartmetall, Cermet, Keramik oder polykristallinem Diamant ausgebildet. Auch er enthält Spanfördernuten 26 und Funktionskanäle 28, die mit den Spanfördernuten 20 bzw. den Funktionskanälen 24 des Werkzeugschafts 10 kommunizieren.

Bei der Reibahle nach Fig. 2 ist der Werkzeugschaft 10 mit einem als Reibkopf ausgebildeten Schneidkopf 12 mittels einer Lotscheibe 18 stoffschlüssig verbunden (verlötet). Die Funktionskanäle 24,28 sind dort im Werkzeugschaft 10 und im Schneidkopf 12 zentral angeordnet.

Da der Werkzeugschaft 10 und der Schneidkopf 12 aus unterschiedlichen Materialien bestehen, weisen sie unterschiedliche Wärmeausdehnungskoeffizienten auf. Beim Lötvorgang kann es in der Fügeschicht 18' und im Grenzbereich der Fügeflächen 14,16 zu inneren Spannungen kommen, die die Belastbarkeit des Werkzeugs herabsetzen und zur Rissbildung führen können. Um dies zu vermeiden, besteht die Lotscheibe aus einem duktilen Lotmaterial 30 aus Kupfer oder Silber, in das Pulverpartikel 31 aus einem temperaturfesten, also bei Fügetemperatur nicht schmelzenden Werkstoff mit kleinerem Wärmeausdehnungskoeffizienten als das Lotmaterial 30 eingebettet sind. Die Pulverpartikel 31 sind von dem Lotmaterial 30 vollständig umhüllt und werden beim Aufschmelzen mit dem Lotmaterial benetzt. Sie haben die Aufgabe, die Wärmeausdehnungskoeffizienten des Lotmaterials an die beiden Fügepartner (Werkzeugschaft 10 und Schneidkopf 12) anzupassen. Die Dichte der Pulverpartikel ist dabei über die Dicke der Lotscheibe 18 bzw. der Fügeschicht 18' hinweg variabel. Bei dem gezeigten Ausführungsbeispiel ist die Dichte der Pulverpartikel auf der Seite 32 des Schneidkopfs 12 höher als auf der Seite 34 des Werkzeugschafts 10. Die in das Lotmaterial eingebetteten Pulverpartikel können aus einem Material der Gruppe Wolfram, Molybdän, Eisen, Kobalt, Nickel oder deren Carbide bestehen.

Bei dem in Fig. 1 bis c gezeigten Ausführungsbeispiel weist die Lotscheibe 18 in Anpassung an die Kontur der Fügeflächen 14,16 eine konvexe Außenkontur 36 auf, die durch zwei konkave Randausnehmungen 38 unterbrochen ist. Die Randausnehmungen entsprechen den Spanfördernuten 20 in den benachbarten Fügepartnern 10,12. Weiter enthält dort die Lotscheibe 18 zwei im Umriss dreieckige Durchbrüche 40, die in ihrer Anordnung und Form den Funktionskanälen 24 im Werkzeugschaft 10 entsprechen. Bei dem Ausführungsbeispiel nach Fig. 2 ist in der Lotscheibe 18 ein zentraler Durchbruch 14 angeordnet, über die die Funktionskanäle 24,28 im Werkzeugschaft 10 und im Reibkopf 12 nach dem Fügevorgang kommunizieren.

Beim Lötvorgang wird die Lotscheibe 18 zwischen die Fügeflächen 14,16 des Werkzeugschafts 10 und des Schneidkopfs 12 eingelegt. Anschließend werden die betreffenden Teile auf Schmelztemperatur des Lotmaterials aufgeheizt und unter Bildung der Fügeschicht 18' miteinander verbunden.

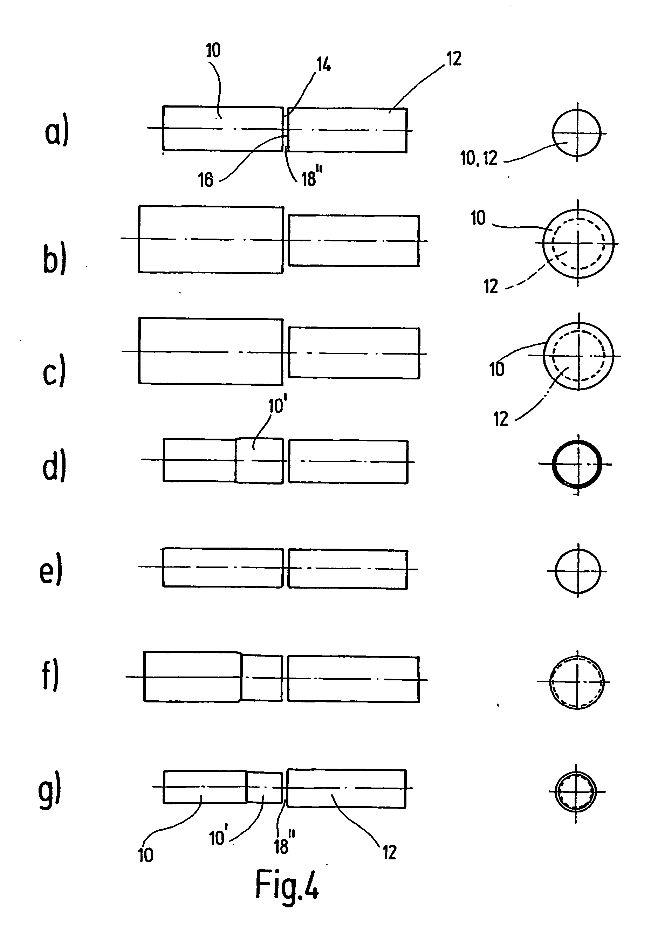

Die beim Lötvorgang und bei einem anschließenden Beschichtungsvorgang aufgrund der unterschiedlichen Wärmeausdehnung in den beiden Fügepartnern 10,12 auftretenden Größenveränderungen sind schematisch in dem Ablaufschema nach Fig. 4 dargestellt. Dort ist jeweils links der aus Stahl bestehende Werkzeugschaft 10 und rechts der aus Hartmetall bestehende Schneidkopf 12 in einer Seitenansicht und ganz rechts in einer Draufsicht vom Werkzeugschaft aus dargestellt. Die Fügezone 18" zwischen den beiden Fügepartnern 10,12 ist der Einfachheit halber durch einen Spalt 18" angedeutet. Dieser Spalt 18" enthält die Lotscheibe 18 (Fig. 4a) bzw. die Fügeschicht 18' (Fig. 4b bis g). Die Größenveränderungen (Länge und Durchmesser) der Fügepartner sind in Fig. 4 zur Veranschaulichung übertrieben dargestellt.

Am Ausgangspunkt in Fig. 4a werden die Fügepartner 10,12 als gleich große zylindrische Bauteile dargestellt. Beim Erwärmen auf Fügetemperatur von 1100 °C (Kupferlot) dehnen sich die Zylinder aufgrund der unterschiedlichen Wärmeausdehnung verschieden aus. Das Bauteil 10 (Stahl) dehnt sich mehr aus als das Bauteil 12 (Hartmetall). Da zwischen den Bauteilen noch keine Verbindung besteht, treten im Zuge der Aufheizung keine inneren Spannungen im Fügebereich auf. Nach Erreichen der Fügetemperatur bei 1100 °C (Fig. 4c) wird das Lotmaterial schmelzflüssig. Die vergrößerten Zylinder bilden bei dieser Temperatur eine stoffschlüssige und noch spannungsfreie Verbindung. Beim Abkühlen auf Zimmertemperatur (Fig. 4d) erstarrt das Lot, während in den Bauteilen 10 und 12 eine Durchmesserverringerung auftritt. Außerdem bildet sich im Bereich schneller Abkühlung im Stahl eine Neuhärtezone 10', die mit einer vergrößerten Gitterspannung und einer Volumenvergrößerung verbunden ist. Im abgekühlten Zustand wird das Bauteil spanabhebend fertig bearbeitet (Fig. 4e). Dabei werden die Bauteile auf gleichen Durchmesser geschliffen. Für das Werkzeug und den Schneidstoff ist es unerlässlich, dass die Teile nach dem Verbinden mit einem hochharten Material, wie Titan, Titannitrit, Bohrnitrit oder Aluminiumnitrit beschichtet werden. Dazu wird das Werkzeug auf eine Beschichtungstemperatur von ca. 500 °C aufgeheizt (Fig. 4f). Das Beschichtungsmaterial wird bei der Beschichtungstemperatur im Vakuum auf das Werkzeug aufgedampft. Dabei wird die Temperatur über eine gewisse Zeitdauer konstant gehalten. Bei der erhöhten Temperatur tritt im Stahl eine Gefügeänderung ein, aufgrund der die Aufhärtung in der Neuhärtezone 10' rückgängig gemacht wird. Gleichzeitig ergibt sich dabei eine Volumenverringerung im Stahl (Fig. 4g). Beim anschließenden Abkühlen führt dies dazu, dass das Bauteil 10 im Bereich der Zone 10' einen kleineren Außendurchmesser erhält als unmittelbar nach dem Lötprozess. Dabei entsteht die Gefahr, dass im Fügebereich innere Spannungen auftreten. Diese Spannungen werden erfindungsgemäß durch die in Fig. 3 schematisch angedeutete Variation der Pulverdichte in der Fügeschicht 18' vermieden. Die Lotscheibe 18 muss hinsichtlich ihrer Duktilität und Wärmeausdehnung also so ausgelegt werden, dass im beschichteten Arbeitszustand (Fig. 4g) weitgehend Spannungsfreiheit in der Fügeschicht 18' und in den benachbarten Bereichen der Fügeflächen 14,16 besteht. In den Zwischenzuständen muss das Lot die gegebenenfalls auftretenden Spannungen aufgrund seiner Duktilität und der örtlich variierenden Wärmeausdehnung aufnehmen.

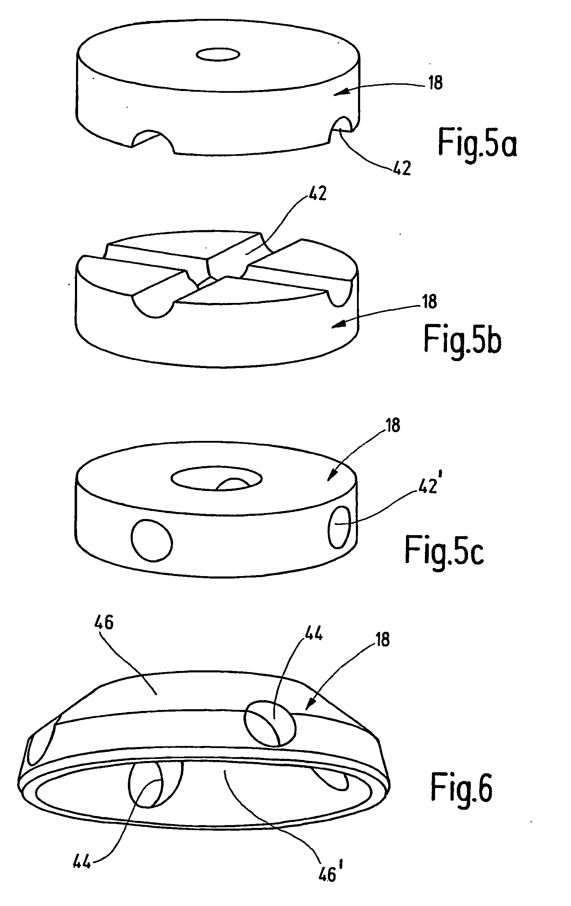

Wie die Fig. 5a bis c und 6 zeigen, kann die Lotscheibe 18 auch als Formteil ausgebildet sein, in das kanalbildende Ausnehmungen 42 oder Bohrungen 44 eingeformt sind. Im Falle der Fig. 5a und b sind zwei sich ergänzende Lotscheiben 18 vorgesehen, deren randoffene Ausnehmungen 42 sich nach dem Lötvorgang zu geschlossenen Radialkanälen 42' ergänzen.

Im Falle der Fig. 6 ist die Lotscheibe 18 als dreidimensionales Formstück ausgebildet, das einen konischen Zentrierabschnitt 46 und Schrägbohrungen 44 aufweist. Die Fügeflächen 14,16 der Fügepartner 10,12 müssen dazu an die benachbarten Außen- bzw. Innenkonen 46,46' der Lotscheibe 18 angepasst sein. Dem konischen Zentrierabschnitt 46,46' kommt hierbei neben der Zentrierfunktion auch eine Orientierungsfunktion zu, die sicherstellt, dass die Lotscheibe mit ihrer variablen Wärmeausdehnung in der richtigen Orientierung eingesetzt wird.

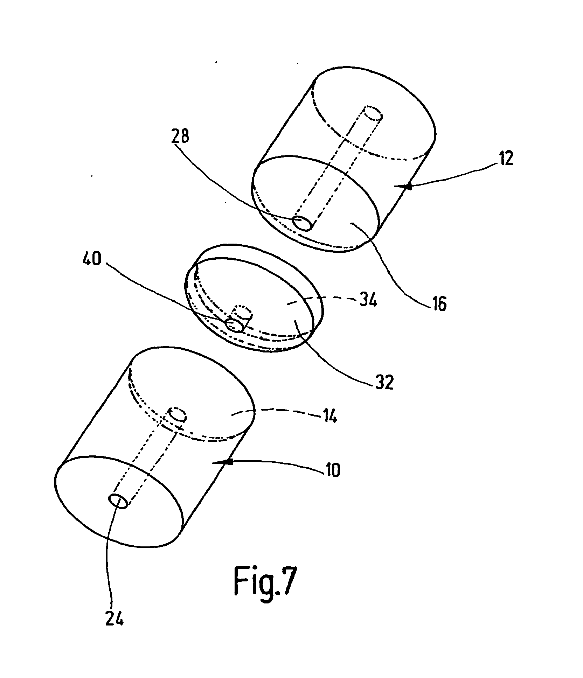

Bei den in Fig. 1 und 2 gezeigten Ausführungsbeispielen sind die Fügeflächen 14,16 der Fügepartner 10,12 als zueinander parallele Planflächen ausgebildet. Versuche haben gezeigt, dass vor allem in einem Hartmetallkörper als Fügepartner Risse auftreten können, die von Fügespannungen herrühren. Diese unzulässigen Fügespannungen können dadurch reduziert oder vermieden werden, dass die einander zugewandten Fügeflächen konkav und/oder konvex gekrümmt werden. Im Falle des Ausführungsbeispiels nach Fig. 7 ist die Fügefläche 16 des vorzugsweise aus Hartmetall bestehenden Schneidkopfs konvex und die Fügefläche 14 des Werkzeugschafts 10 konkav gekrümmt, wobei die Lotscheibe 18 an ihren den Fügepartnern zugewandten Seiten 32,34 eine hierzu komplementäre Krümmung aufweist. Zur Veranschaulichung sind die betreffenden Krümmungen in Fig. 7 übertrieben dargestellt.

Zusammenfassend ist folgendes festzuhalten: Die Erfindung bezieht sich auf ein Maschinenwerkzeug mit einem Werkzeugschaft 10 und einem Schneidkopf 12 aus unterschiedlichen Werkstoffen, die an einander zugewandten Fügeflächen 14,16 über eine Fügeschicht 18' aus duktilem Lotmaterial stoffschlüssig miteinander verbunden sind. Um eine weitgehend spannungsfreie Lötverbindung zu erhalten, wird gemäß der Erfindung vorgeschlagen, dass in die Fügeschicht 18' Pulverpartikel 31 aus einem temperaturfesten Werkstoff mit kleinerem Wärmeausdehnungskoeffizienten als das Lotmaterial 30 eingebettet sind, wobei die Dichte der Pulverpartikel 31 über die Dicke der Fügeschicht 18' hinweg variiert.

## Patentansprüche

1. Maschinenwerkzeug mit einem Werkzeugschaft (10) und einem Schneidkopf (12) aus unterschiedlichen Werkstoffen, die an einander zugewandten Fügeflächen (14,16) über eine Fügeschicht (18') aus duktilem Lotmaterial stoffschlüssig miteinander verbunden sind, wobei in die Fügeschicht (18') Pulverpartikel (31) aus einem temperaturfesten, bei Fügetemperatur nicht schmelzenden Werkstoff mit kleinerem Wärmeausdehnungskoeffizienten als das Lotmaterial (30) eingebettet sind, **dadurch gekennzeichnet, dass** die Fügeschicht (18') über ihre Schichtdicke hinweg einen unterschiedlichen Wärmeausdehnungskoeffizienten aufweist, wobei der Wärmeausdehnungskoeffizient auf der Seite (32) des Schneidkopfs (12) kleiner als auf der Seite (34) des Werkzeugschafts (10) ist, der Werkzeugschaft (10) aus Stahl, vorzugsweise aus Werkzeugstahl besteht, wobei der Schneidkopf aus einem Material der Gruppe Hartmetall, Cermet, Keramik oder PKD besteht, wobei die Fügeschicht (18') ein Lotmaterial der Gruppe Kupfer, Silber, Kobalt oder deren Legierungen enthält und wobei die in das Lotmaterial (30) der Fügeschicht (18') eingebetteten Pulverpartikel (31) aus einem Material der Gruppe Wolfram, Molybdän, Eisen, Kobalt, Nickel oder deren Carbide bestehen.

2. Maschinenwerkzeug nach Anspruch 1, **dadurch gekennzeichnet, dass** die Dichte der Pulverpartikel (31) über die Dicke der Fügeschicht (18') hinweg variiert.

3. Maschinenwerkzeug nach Anspruch 1 oder 2, **dadurch gekennzeichnet, dass** die Dichte der Pulverpartikel (31) innerhalb der Fügeschicht (18') auf der Seite (32) des Schneidkopfs (12) höher als auf der Seite (34) des Werkzeugschafts (10) ist.

4. Maschinenwerkzeug nach einem der Ansprüche 1 bis 3, **dadurch gekennzeichnet, dass** der Werkzeugschaft aus einem Einsatzstahl mit einem Phasenumwandlungspunkt in einem Bereich von 480 bis 650°C besteht.

5. Maschinenwerkzeug nach Anspruch 4, **dadurch gekennzeichnet, dass** der Werkzeugschaft aus einem Einsatzstahl mit einem Chromgehalt kleiner 2% besteht.

6. Maschinenwerkzeug nach einem der Ansprüche 4 oder 5, **dadurch gekennzeichnet, dass** der Werkzeugschaft aus einem 16 MnCr 5-Stahl besteht.

7. Maschinenwerkzeug nach einem der Ansprüche 5 bis 6, **dadurch gekennzeichnet, dass** der Einsatzstahl zumindest an der äußeren Oberfläche des Werkzeugschafts aufgekohlt oder aufnitriert ist.

8. Maschinenwerkzeug nach einem der Ansprüche 1 bis 7, **dadurch gekennzeichnet, dass** die einander zugewandten Fügeflächen (14,16) des Werkzeugschafts (10) und des Schneidkopfs (12) vorzugsweise zueinander komplementär gekrümmt sind.

9. Maschinenwerkzeug nach einem der Ansprüche 1 bis 8, **dadurch gekennzeichnet, dass** die Fügefläche (16) des Schneidkopfs (12) konvex gekrümmt ist.

10. Maschinenwerkzeug nach einem der Ansprüche 1 bis 9, **dadurch gekennzeichnet, dass** die Fügefläche (14) des Werkzeugschafts (10) konkav gekrümmt ist.

11. Maschinenwerkzeug nach einem der Ansprüche 1 bis 10, **dadurch gekennzeichnet, dass** der Werkzeugschaft (10) mindestens eine vorzugsweise schraubenförmig gewundene Spanfördernut (20) aufweist, die die Fügeschicht (18') in Richtung Schneidkopf (12) durchdringt.

12. Maschinenwerkzeug nach einem der Ansprüche 1 bis 11, **dadurch gekennzeichnet, dass** der Werkzeugschaft (10) mindestens einen vorzugsweise schraubenförmig gewundenen Funktionskanal (24) aufweist, der die Fügeschicht (18') in Richtung Schneidkopf (12) durchdringt.

13. Maschinenwerkzeug nach einem der Ansprüche 1 bis 12, **dadurch gekennzeichnet, dass** die Dicke der Fügeschicht (18') dem 10- bis 1000-fachen Durchmesser der Pulverpartikel (31) entspricht.

14. Maschinenwerkzeug nach einem der Ansprüche 1 bis 13, **dadurch gekennzeichnet, dass** die Dicke der Fügeschicht (18') 0,1 bis 2 mm beträgt.

15. Verfahren zur Herstellung eines Maschinenwerkzeugs nach einem der Ansprüche 1 bis 14, bei welchem ein vorgeformter Werkzeugschaft (10) und ein vorzugsweise als Rohling vorgeformter Schneidkopf (12) durch Aufschmelzen und anschließendes Abkühlen eines Lots (18) im Bereich eines Fügespalts unter Bildung einer Fügeschicht (18') stoffschlüssig miteinander verbunden werden, **dadurch gekennzeichnet, dass** das Lot in Form mindestens zweier Lotscheiben (18) aus Lotmaterial (30) mit eingebetteten temperaturfesten Pulverpartikeln (31) und unterschiedlicher Partikeldichte in den Fügespalt eingelegt wird und dass die Lotscheiben dort miteinander verschmolzen werden.

16. Verfahren nach Anspruch 15, **gekennzeichnet durch** folgende Verfahrensschritte:
a) die aus Werkzeugschaft (10) und Schneidkopf (12) bestehenden Fügepartner werden auf Fügetemperatur aufgeheizt,
b) die mindestens zwei Lotscheiben (18) werden vor, während oder nach dem Aufheizen in einen Fügespalt zwischen den Fügepartnern (10,12) eingelegt;
c) bei Erreichen der Fügetemperatur werden die einander zugewandten Fügeflächen (14,16) der Fügepartner (10,12) mit aufgeschmolzenem Lotmaterial (30) benetzt;
d) danach werden die Fügepartner unter Bildung eines Verbundteils auf Raumtemperatur abgekühlt;
e) anschließend wird das Verbundteil bei Raumtemperatur spanabhebend bearbeitet und im Fügebereich beispielsweise **durch** Schleifen auf gleichen Durchmesser gebracht;
f) das so vorbereitete Verbundteil wird erneut auf eine Beschichtungstemperatur unterhalb der Fügetemperatur erhitzt und eine Zeit lang auf dieser Temperatur gehalten und dabei vorzugsweise mit einem Überzugsmaterial beschichtet;
g) danach wird das Verbundteil unter Bildung des Fertigteils auf Raumtemperatur abgekühlt.

17. Verfahren nach Anspruch 15 oder 16, **dadurch gekennzeichnet, dass** der axiale Dichteverlauf der Pulverteilchen (31) im Lotmaterial so ausgewählt wird, dass im Fertigteil eine im Wesentlichen spannungsfreie Fügezone gebildet wird.

18. Verfahren nach einem der Ansprüche 15 bis 17, **dadurch gekennzeichnet, dass** das Gefüge des aus Kohlenstoffstahl oder einem oberflächlich aufgekohlten Einsatzstahl bestehenden Werkzeugschafts (10) beim schnellen Abkühlen der Fügepartner aufgehärtet und beim anschließenden Temperungs- und/oder Beschichtungsprozess angelassen und entspannt wird.

19. Verfahren nach einem der Ansprüche 15 bis 18, **dadurch gekennzeichnet, dass** die Lotscheiben (18) im festen Zustand vor dem Aufheizen der Fügepartner (10,12) mit einem der Fügepartner verbunden, vorzugsweise auf diesen aufgesteckt oder aufgesintert werden.

20. Lotscheibe für das Verbinden von Werkzeugschaft und Schneidkopf bei einem Maschinenwerkzeug, bestehend aus einem duktilen Lotmaterial, in welches Pulverpartikel aus einem temperaturfesten Werkstoff mit kleinerem Wärmeausdehnungskoeffizienten als das Lotmaterial (30) eingebettet sind, **dadurch gekennzeichnet, dass** sie mindesten eines der folgenden Geometriemerkmale aufweist:
- eine konvexe Kontur (36), die durch mindestens eine konkave Randausnehmung (38) unterbrochen ist,
- zwei auf einander gegenüberliegenden Seiten angeordnete konkave Randausnehmungen (38),
- eine Bohrung, die dazu bestimmt und geeignet ist, mit einem Funktionskanal in einem Fügespalt zu fluchten,
- mehrere Querkanäle,
- mehrere Durchbrüche,
wobei das Lotmaterial (30) aus Material der Gruppe Kupfer, Silber, Kobalt und deren Legierungen und die in das Lotmaterial (30) eingebetteten Pulverpartikel (31) aus einem Material der Gruppe Wolfram, Molybdän, Eisen, Kobalt, Nickel oder deren Carbide bestehen, wobei die Dichte der Pulverpartikel (31) über die Scheibendicke hinweg variiert.

21. Lotscheibe nach Anspruch 20, **dadurch gekennzeichnet, dass** die Dichte der Pulverpartikel über den Scheibenradius variiert.

22. Lotscheibe nach Anspruch 20 oder 21, **dadurch gekennzeichnet, dass** sie als dreidimensionales Formstück ausgebildet ist, das eine durch Bohrungen (42',44), Ausnehmungen (42), oder Rillen gebildete Funktionsstruktur aufweist.

23. Lotscheibe nach einem der Ansprüche 20 bis 22, **dadurch gekennzeichnet, dass** sie mindestens eine zentrale Bohrung (44) aufweist.

24. Lotscheibe nach einem der Ansprüche 20 bis 23, **dadurch gekennzeichnet, dass** sie zwei zueinander planparallele Fügeflächen (32,34) aufweist.

25. Lotscheibe nach einem der Ansprüche 20 bis 24, **dadurch gekennzeichnet, dass** ihre einander abgewandten Fügeflächen (32,34) konvex und/oder konkav gekrümmt sind.

26. Lotscheibe nach einem der Ansprüche 20 bis 25, **dadurch gekennzeichnet, dass** ihre Fügeflächen (32,34) eine aus Erhöhungen und/oder Vertiefungen gebildete Oberflächenstruktur aufweisen.

## Claims

1. A cutting tool having a tool shank (10) and a cutting head (12) made of different materials which are integrally connected to one another via a joining layer (18') made of ductile brazing material at joining surfaces (14, 16) facing one another, wherein powder particles (31) made of a temperature-resistant material having a lower coefficient of thermal expansion than the brazing material (30) are embedded in the joining layer (18'), **characterized in that** the joining layer (18') has a variable coefficient of thermal expansion over its layer thickness, wherein the joining layer (18') has a lower coefficient of thermal expansion on the side (32) of the cutting head (12) than on the side (34) of the tool shank (10), **in that** the tool shank (10) is made of steel, preferably of tool steel, wherein the cutting head is made of a material of the group comprising cemented carbide, cermet, ceramic or PCD, wherein the joining layer (18') contains a brazing material of the group comprising copper, silver, cobalt or their alloys, and wherein the powder particles (31) embedded in the brazing material (30) of the joining layer (18') are made of a material of the group comprising tungsten, molybdenum, iron, cobalt, nickel or their carbides.

2. The cutting tool as claimed in claim 1, **characterized in that** the density of the powder particles (31) varies over the thickness of the joining layer (18').

3. The cutting tool as claimed in claim 1 or 2, **characterized in that** the density of the powder particles (31) within the joining layer (18') is higher on the side (32) of the cutting head (12) than on the side (34) of the tool shank (10).

4. The cutting tool as claimed in one of claims 1 to 3, **characterized in that** the tool shank is made of a case-hardened steel having a phase transformation point within a range of 480 to 650°C.

5. The cutting tool as claimed in claim 4, **characterized in that** the tool shank is made of a case-hardened steel having a chrome content of less than 2%.

6. The cutting tool as claimed in claim 4 or 5, **characterized in that** the tool shank is made of a 16MnCr5 steel.

7. The cutting tool as claimed in one of claims 5 to 6, **characterized in that** the case-hardened steel is carburized or nitrided at least on the outer surface of the tool shank.

8. The cutting tool as claimed in one of claims 1 to 7, **characterized in that** the joining surfaces (14, 16), facing one another, of the tool shank (10) and the cutting head (12) are preferably curved so as to be complementary to one another.

9. The cutting tool as claimed in one of claims 1 to 8, **characterized in that** the joining surface (16) of the cutting head (12) is convexly curved.

10. The cutting tool as claimed in one of claims 1 to 9, **characterized in that** the joining surface (14) of the tool shank (10) is concavely curved.

11. The cutting tool as claimed in one of claims 1 to 10, **characterized in that** the tool shank (10) has at least one preferably helically wound flute (20), which passes through the joining layer (18') in the direction of the cutting head (12).

12. The cutting tool as claimed in one of claims 1 to 11, **characterized in that** the tool shank (10) has at least one preferably helically wound functional passage (24), which passes through the joining layer (18') in the direction of the cutting head (12).

13. The cutting tool as claimed in one of claims 1 to 12, **characterized in that** the thickness of the joining layer (18') corresponds to 10 to 1000 times the diameter of the powder particles (31).

14. The cutting tool as claimed in one of claims 1 to 13, **characterized in that** the thickness of the joining layer (18') is 0.1 to 2 mm.

15. A method of producing a cutting tool as claimed in one of claims 1 to 14, in which a preformed tool shank (10) and a cutting head (12) preferably preformed as a blank are integrally connected to one another by fusing and subsequently cooling a brazing filler (18) in the region of a joining gap while forming a joining layer (18'), **characterized in that** the brazing filler in the form of at least two brazing disks (18) made of brazing material (30) containing embedded temperature-resistant powder particles (31) and having a different particle density are inserted into the joining gap and are fused to one another there.

16. The method as claimed in claim 15, **characterized by** the following method steps:
a) the joining members consisting of tool shank (10) and cutting head (12) are heated to joining temperature;
b) the at least one brazing disk (18) is inserted into a joining gap between the joining members (10, 12) before, during or after the heating;
c) after the joining temperature is reached, the joining surfaces (14, 16), facing one another, of the joining members (10, 12) are wetted with fused brazing material (30);
d) after that, the joining members are cooled to room temperature while forming a composite part;
e) the composite part is then machined at room temperature and is brought to the same diameter in the joining region, for example by grinding;
f) the composite part prepared in this way is heated again to a coating temperature below the joining temperature and held for a time at this temperature and in the process is preferably coated with a coating material;
g) after that, the composite part is cooled to room temperature while forming the finished part.

17. The method as claimed in claim 15 or 16, **characterized in that** the axial density profile of the powder particles (31) in the brazing material is selected in such a way that an essentially stress-free joining zone is formed in the finished part.

18. The method as claimed in one of claims 15 to 17, **characterized in that** the structure of the tool shank (10) made of carbon steel or a surface-carburized case-hardened steel is hardened during the rapid cooling of the joining members and is annealed and stress-relieved during the subsequent tempering and/or coating process.

19. The method as claimed in one of claims 15 to 18, **characterized in that** the brazing disk (18), in the solid state before the heating of the joining members (10, 12), is connected to one of the joining members, preferably slipped onto or sintered in place on said joining member.

20. A brazing disk for joining a tool shank and a cutting head of a cutting tool, comprised of a ductile brazing material in which powder particles made of a temperature-resistant material having a lower coefficient of thermal expansion than the brazing material are embedded, **characterized in that** it has at least one of the following geometric features:
- a convex contour (36) which is interrupted by at least one concave marginal recess (38),
- two concave marginal recesses (38) arranged on sides opposite one another,
- a hole which is intended for and capable of being aligned with a functional channel in a joining gap,
- a plurality of transverse channels,
- a plurality of openings,
wherein the brazing material (30) is made from material of the group comprising copper, silver, cobalt and their alloys and the powder particles (31) embedded in the brazing material (30) are made of a material of the group comprising tungsten, molybdenum, iron, cobalt, nickel or their carbides, wherein the density of the powder particles (31) varies over the disk thickness.

21. The brazing disk as claimed in claim 20, **characterized in that** the density of the powder particles varies over the disk radius.

22. The brazing disk as claimed in claim 20 or 21, **characterized in that** it is designed as a three-dimensional shaped piece, which has a functional structure formed by holes (42', 44), recesses (42), grooves.

23. The brazing disk as claimed in of of claims 20 to 22, **characterized in that** it has at least one central bore (44).

24. The brazing disk as claimed in one of claims 20 to 23, **characterized in that** it has two plane joining surfaces (32, 34) parallel to one another.

25. The brazing disk as claimed in one of claims 20 to 24, **characterized in that** its joining surfaces (32, 34) facing away from one another are convexly and/or concavely curved.

26. The brazing disk as claimed in one of claims 20 to 25, **characterized in that** its joining surfaces (32, 34) have a surface structure formed from prominences and/or depressions.

## Revendications

1. Outil d'usinage, avec une tige d'outil (10) et avec une tête de coupe (12) constituées de matériaux différents, qui sont reliées entre elles par liaison de matière, sur des faces d'assemblage (14, 16) tournées l'une vers l'autre, au moyen d'une couche d'assemblage (18') en matériau de brasage ductile, sachant qu'on incorpore dans la couche d'assemblage (18') des particules de poudre (31) en un matériau résistant aux températures élevées qui ne fond pas à la température d'assemblage et qui possède un coefficient de dilatation thermique inférieur à celui du matériau de brasage (30), **caractérisé en ce que** la couche d'assemblage (18') présente un coefficient de dilatation thermique variable sur l'épaisseur de la couche, sachant que le coefficient de dilatation thermique est moindre du côté (32) de la tête de coupe (12) que du côté (34) de la tige d'outil (10) et que la tige d'outil (10) est réalisée en acier, de préférence en acier à outils, sachant que la tête de coupe est constituée d'un matériau du groupe des métaux durs, des cermets, des matériaux céramiques et des diamants polycristallins (PCD), sachant que la couche d'assemblage (18') contient un matériau de brasage du groupe du cuivre, de l'argent, du cobalt et de leurs alliages, et sachant que les particules de poudre (31) incorporées dans le matériau de brasage (30) de la couche d'assemblage (18') sont constituées d'un matériau du groupe du wolfram, du molybdène, du fer, du cobalt, du nickel et de leurs carbures.

2. Outil d'usinage selon la revendication 1, **caractérisé en ce que** la densité des particules de poudre (31) varie sur l'épaisseur de la couche d'assemblage (18').

3. Outil d'usinage selon la revendication 1 ou 2, **caractérisé en ce que** la densité des particules de poudre (31) à l'intérieur de la couche d'assemblage (18') est plus élevée du côté (32) de la tête de coupe (12) que du côté (34) de la tige d'outil (10).

4. Outil d'usinage selon l'une des revendications 1 à 3, **caractérisé en ce que** la tige d'outil est constituée d'un acier de cémentation ayant un point de changement de phase dans la plage de 480 à 650°C.

5. Outil d'usinage selon la revendication 4, **caractérisé en ce que** la tige d'outil est constituée d'un acier de cémentation ayant une teneur en chrome inférieure à 2%.

6. Outil d'usinage selon la revendication 4 ou 5, **caractérisé en ce que** la tige d'outil est constituée d'un acier 16 Mn Cr 5.

7. Outil d'usinage selon l'une des revendications 5 à 6, **caractérisé en ce que** l'acier de cémentation est carburé ou nitruré au moins sur la surface extérieure de la tige d'outil.

8. Outil d'usinage selon l'une des revendications 1 à 7, **caractérisé en ce que** les faces d'assemblage (14, 16) tournées l'une vers l'autre de la tige d'outil (10) et de la tête de coupe (12) sont de préférence à courbures mutuellement complémentaires.

9. Outil d'usinage selon l'une des revendications 1 à 8, **caractérisé en ce que** la face d'assemblage (16) de la tête de coupe (12) est à courbure convexe.

10. Outil d'usinage selon l'une des revendications 1 à 9, **caractérisé en ce que** la face d'assemblage (14) de la tige d'outil (10) est à courbure concave.

11. Outil d'usinage selon l'une des revendications 1 à 10, **caractérisé en ce que** la tige d'outil (10) présente au moins une rainure (20) d'évacuation des copeaux, de préférence enroulée en hélice, qui traverse la couche d'assemblage (18') en direction de la tête de coupe (12).

12. Outil d'usinage selon l'une des revendications 1 à 11, **caractérisé en ce que** la tige d'outil (10) présente au moins un canal fonctionnel (24), de préférence enroulé en hélice, qui traverse la couche d'assemblage (18') en direction de la tête de coupe (12).

13. Outil d'usinage selon l'une des revendications 1 à 12, **caractérisé en ce que** l'épaisseur de la couche d'assemblage (18') correspond à 10 à 1000 fois le diamètre des particules de poudre (31).

14. Outil d'usinage selon l'une des revendications 1 à 13, **caractérisé en ce que** l'épaisseur de la couche d'assemblage (18') est comprise entre 0,1 et 2 mm.

15. Procédé de fabrication d'un outil d'usinage selon l'une des revendications 1 à 14, selon lequel une tige d'outil préformée (10) et une tête de coupe (12) de préférence préformée sous forme d'ébauche sont, par fusion puis refroidissement d'un apport de brasage (18), reliées entre elles par liaison de matière dans la région d'une fente d'assemblage en formant une couche d'assemblage (18'), **caractérisé en ce que** l'apport de brasage est inséré dans la fente d'assemblage sous la forme d'au moins deux disques de brasage (18) en matériau de brasage (30) dans lequel sont incorporées des particules de poudre (31) résistant aux températures élevées, les disques ayant des densités de particules différentes, et **en ce que** les disques de brasage y sont assemblés entre eux par fusion.

16. Procédé selon la revendication 15, **caractérisé par** les étapes de procédé suivantes :
a) les partenaires d'assemblage, constitués de la tige d'outil (10) et de la tête de coupe (12), sont chauffés à la température d'assemblage,
b) les au moins deux disques de brasage (18) sont, avant, pendant ou après le chauffage, insérés dans une fente d'assemblage entre les partenaires d'assemblage (10, 12) ;
c) à l'atteinte de la température d'assemblage, les faces d'assemblage (14, 16) tournées l'une vers l'autre des partenaires d'assemblage (10, 12) sont imprégnées du matériau de brasage fondu (30) ;
d) ensuite, les partenaires d'assemblage sont refroidis à la température ambiante, formant ainsi un élément composite ;
e) ensuite, l'élément composite est usiné par enlèvement de copeaux à la température ambiante et amené à un diamètre uniforme dans la région d'assemblage, par exemple par meulage ;
f) l'élément composite ainsi préparé est à nouveau chauffé à une température de revêtement inférieure à la température d'assemblage et est maintenu pendant un certain temps à cette température, en étant alors de préférence revêtu d'un matériau de revêtement ;
g) ensuite, l'élément composite est refroidi à la température ambiante, formant ainsi l'élément fini.

17. Procédé selon la revendication 15 ou 16, **caractérisé en ce que** l'allure axiale de densité des particules de poudre (31) dans le matériau de brasage est choisie de telle sorte qu'une zone d'assemblage essentiellement dépourvue de contraintes est formée dans l'élément fini.

18. Procédé selon l'une des revendications 15 à 17, **caractérisé en ce que** la structure de la tige d'outil (10) constituée d'acier au carbone ou d'un acier de cémentation carburé sur la surface est trempée lors du refroidissement rapide des partenaires d'assemblage, et recuite et détendue lors du processus de revenu et/ou de revêtement consécutif.

19. Procédé selon l'une des revendications 15 à 18, **caractérisé en ce que** les disques de brasage (18) sont, dans l'état solide avant le chauffage des partenaires d'assemblage (10, 12), assemblés à un des partenaires d'assemblage, de préférence emmanchés ou frittés sur ce dernier.

20. Disque de brasage pour l'assemblage de la tige d'outil et de la tête d'outil d'un outil d'usinage, constitué d'un matériau de brasage ductile dans lequel sont incorporées des particules de poudre en un matériau résistant aux températures élevées qui possède un coefficient de dilatation thermique inférieur à celui du matériau de brasage (30), **caractérisé en ce qu'**il présente au moins une des caractéristiques géométriques suivantes :
- un contour convexe (36), qui est interrompu par au moins un évidement marginal concave (38),
- deux évidements marginaux concaves (38) sur des côtés mutuellement opposés,
- un perçage, qui est destiné et apte à être aligné avec un canal fonctionnel dans une fente d'assemblage,
- plusieurs canaux transversaux,
- plusieurs ouvertures,
sachant que le matériau de brasage (30) est constitué d'un matériau du groupe du cuivre, de l'argent, du cobalt et de leurs alliages et que les particules de poudre (31) incorporées dans le matériau de brasage (30) sont constituées d'un matériau du groupe du wolfram, du molybdène, du fer, du cobalt, du nickel et de leurs carbures, sachant que la densité des particules de poudre (31) varie sur l'épaisseur du disque.

21. Disque de brasage selon la revendication 20, **caractérisé en ce que** la densité des particules de poudre varie sur le rayon du disque.

22. Disque de brasage selon la revendication 20 ou 21, **caractérisé en ce qu'**il est réalisé sous forme de pièce façonnée à trois dimensions, qui présente une structure fonctionnelle formée par des perçages (42', 44), des évidements (42) ou des rainures.

23. Disque de brasage selon l'une des revendications 20 à 22, **caractérisé en ce qu'**il présente au moins un perçage central (44).

24. Disque de brasage selon l'une des revendications 20 à 23, **caractérisé en ce qu'**il présente deux faces d'assemblage (32, 34) parallèles et planes.

25. Disque de brasage selon l'une des revendications 20 à 24, **caractérisé en ce que** ses faces d'assemblage (32, 34) mutuellement opposées sont à courbure convexe et/ou concave.

26. Disque de brasage selon l'une des revendications 20 à 25, **caractérisé en ce que** ses faces d'assemblage (32, 34) présentent une structure de surface formée de bossages et/ou de renfoncements.
